(19)

**Europäisches Patentamt**

**European Patent Office**

**Office européen des brevets**

(11) **EP 4 708 135 A1**

(12) **EUROPEAN PATENT APPLICATION**

(43) Date of publication:
**11.03.2026 Bulletin 2026/11**

(21) Application number: **24465569.2**

(22) Date of filing: **06.09.2024**

(51) International Patent Classification (IPC):
**G06N 3/045** (2023.01)

(52) Cooperative Patent Classification (CPC):
**G06N 3/045; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Healthineers AG**
**91301 Forchheim (DE)**

(72) Inventors:
- **CHITIBOI, Teodora Marina**
  **22529 Hamburg (DE)**
- **POPESCU, Andreea Bianca**
  **900095 Constanta (RO)**

(74) Representative: **HKW Intellectual Property PartG mbB**
**Theresienhöhe 12**
**80339 München (DE)**

(54) **MULTI-TASK LEARNING-BASED MYOCARDIAL SEGMENTATION AND DISEASE DETECTION IN CARDIAC MR TISSUE MAPPING IMAGES**

(57)     Systems and methods for myocardial segmentation and disease detection using a multi-task deep learning model (300). The multi-task deep learning model (300) simultaneously performs segmentation and disease detection using the interrelated aspects to improve both tasks. The multi-task deep learning model (300) includes an encoder-decoder structure (310) where a compressed representation (316) extracted by an encoder of the encoder-decoder structure (310) is used for both reconstructing a segmentation mask (350) in the decoder and as an input for disease detection.

**EP 4 708 135 A1**

**Description**

FIELD

This disclosure relates to medical imaging.

BACKGROUND

Magnetic resonance imaging (MRI) is an important and useful imaging modality used in clinical practice. MRI is a non-invasive imaging technology that produces detailed anatomical images by imaging the body's soft tissues and internal anatomical structures without ionizing radiation. The MRI images may be used for multiple different applications, for example including disease detection and analysis. One area in particular where MRI is useful is in detecting cardiac diseases such as myocarditis, sarcoidosis, or systemic diseases. Traditionally, MRI images have been manually interpreted by an operator. Manual interpretation, however, can be inaccurate and time consuming. In recent years, automated disease detection techniques have been developed that attempt to speed up this process.

However, automated disease detection for such diseases may be difficult as morphological changes may not be specific to the disease. This problem is particularly critical in the field of medical imaging and cardiology, where precise and efficient analysis of myocardial tissues is essential for accurate diagnosis, treatment planning, and monitoring the progression of cardiac diseases. The heart's complex anatomy and the variability among individuals make it difficult to accurately segment and analyze the myocardium from cardiac MRI images. This variability can be due to differences in heart size, shape, and the presence of pathological conditions. Achieving high sensitivity and specificity in detecting cardiac diseases from MRI maps is thus challenging. For example, current methods may not accurately differentiate between healthy and diseased tissues, especially in early stages of disease or in less pronounced cases. The quality of T1 and T2 maps may vary significantly due to factors such as patient movement, differences in MRI equipment, and imaging parameters. These inconsistencies can hinder accurate automated segmentation and disease detection. As such, fully automated systems may not be used and myocardial segmentation and disease detection often have to rely on manual or semi-automated methods, which are time-consuming, prone to human error, and subject to inter-operator variability.

SUMMARY

By way of introduction, the preferred embodiments described below include methods, systems, instructions, and computer readable media for myocardial segmentation and disease detection in cardiac magnetic resonance (MR) tissue mapping images. A multi-task deep learning model is configured to simultaneously perform segmentation and disease detection using the interrelated aspects to improve both tasks.

In a first aspect, a method for magnetic resonance (MR) image analysis, the method comprising: acquiring one or more MR images of a patient; applying a multi-task deep learning model to the one or more MR images, the multi-task deep learning model configured to simultaneously perform segmentation and disease detection, wherein the multi-task deep learning model comprises an encoder-decoder structure and a classification network, wherein a compressed representation extracted by an encoder of the encoder-decoder structure is used for reconstructing a segmentation mask by the decoder of the encoder-decoder structure and as an input for the classification network for a classification of one or more diseases; and outputting, by the multi-task deep learning model the segmentation mask and the classification.

In a second aspect, a system for magnetic resonance (MR) image analysis, the system comprising: a medical imaging device configured to acquire a cardiac image of a patient; a memory configured to store a multi-task deep learning model configured to simultaneously perform segmentation and disease detection, wherein the multi-task deep learning model comprises an encoder-decoder structure and a classification network, wherein a latent space extracted by an encoder of the encoder-decoder structure is used for reconstructing one or more segmentation masks by the decoder of the encoder-decoder structure and as an input for the classification network for a classification of one or more diseases; and a processor configured to generate the one or more segmentation masks and the classification by inputting the cardiac image into the multi-task deep learning model.

In a third aspect, a method for configuring a multi-task deep learning model, the method comprising: acquiring training data comprising a plurality of cardiac magnetic resonance (MR) images, related ground truth segmentation masks, and related ground truth disease classifications; inputting a cardiac MR image into the multi-task deep learning model, the multi-task deep learning model comprising a segmentation branch and a disease classification branch; outputting by the multi-task deep learning model, a segmentation mask and a disease classification; adjusting weights of the segmentation branch based on a comparison of the segmentation mask to the related ground truth segmentation mask; adjusting weights of the disease classification branch based on a comparison of the disease classification to the related ground truth disease classification; repeating inputting, outputting, adjusting, and adjusting for a plurality of iterations; and outputting a trained multi-task deep learning model.

Any one or more of the aspects described above may be used alone or in combination. These and other aspects, features and advantages will become apparent from the following detailed description of preferred embodiments, which is to be read in connection with the accompanying drawings. The present invention is defined by the following claims, and nothing in this section should be taken as a limitation on those claims. Further aspects and advantages of the invention are discussed below in conjunction with the preferred embodiments and may be later claimed independently or in combination.

BRIEF DESCRIPTION OF THE DRAWINGS

The components and the figures are not necessarily to scale, emphasis instead being placed upon illustrating the principles of the embodiments. Moreover, in the figures, like reference numerals designate corresponding parts throughout the different views.

Figure 1 depicts an example MRI system.
Figure 2 depicts an example method for myocardial segmentation and disease detection in cardiac magnetic resonance (MR) tissue mapping images according to an embodiment.
Figure 3 depicts an example network architecture for myocardial segmentation and disease detection in cardiac magnetic resonance (MR) tissue mapping images according to an embodiment.
Figure 4 depicts examples of an input image and output segmentation masks according to an embodiment.
Figure 5 depicts an example artificial neural network (ANN) for myocardial segmentation and disease detection in cardiac magnetic resonance (MR) tissue mapping images according to an embodiment.
Figure 6 depicts an example convolutional neural network for myocardial segmentation and disease detection in cardiac magnetic resonance (MR) tissue mapping images according to an embodiment.
Figure 7 depicts an example method for training a multi-task deep learning model for myocardial segmentation and disease detection in cardiac magnetic resonance (MR) tissue mapping images according to an embodiment.

DETAILED DESCRIPTION

Embodiments described herein provide systems and methods for myocardial segmentation and disease detection using a multi-task deep learning model. The multi-task deep learning model simultaneously performs segmentation and disease detection using the interrelated aspects to improve both tasks. The multi-task deep learning model includes an encoder-decoder structure where a compressed representation extracted by an encoder of the encoder-decoder structure is used for both reconstructing a segmentation mask in the decoder and as an input for disease detection.

Cardiac MRI (also referred to as cardiovascular MRI) is a imaging technique used for non-invasive assessment of the function and structure of the cardiovascular system. Cardiac MRI uses magnetic field and radiofrequency waves to create images of a subject's heart and/or arteries. The images may be used for various applications and in particular, to diagnose cardiac diseases such as myocarditis, sarcoidosis, or systemic diseases.

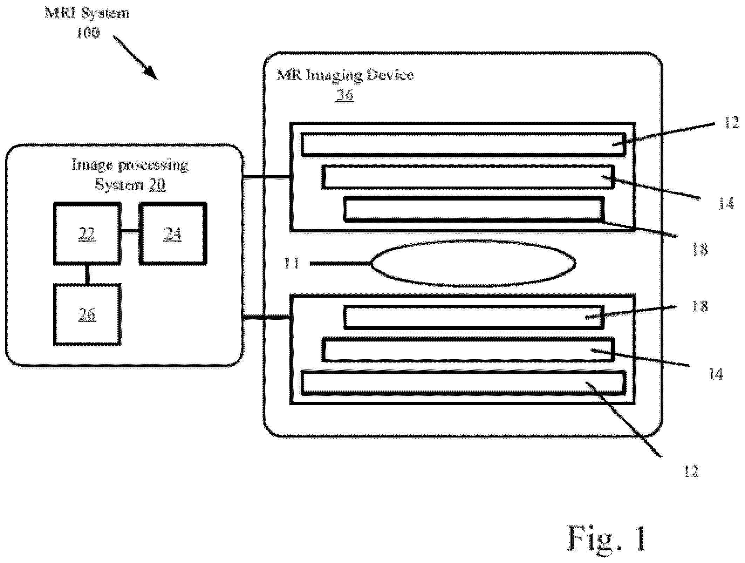

Figure 1 depicts an example MR imaging system 100 that may be used for Cardiac MRI procedures. The examples described herein use an MRI system, but the imaging and analysis techniques may be provided by other modalities such as CT, PET, SPECT, or other medical imaging. The examples further use a cardiovascular (heart) procedure and Cardiac MRI as an example, but any organ or region may be imaged by the system 100. In this example, MRI data is acquired by the MR system 100 which generates an image that is used by the multi-task deep learning model to generate a segmentation mask (also referred to as a segmentation map) and disease diagnosis

(disease classification). The multi-task deep learning model is configured / trained as described below. The multi-task deep learning model may be implemented by the MR system 100, for example, the MR scanner 36 or system, a computer based on data obtained by MR scanning, a server, or another processor 22. The MR imaging device 36 is only exemplary, and a variety of MR scanning systems may be used to collect the MR data. The MR imaging device 36 (also referred to as a MR scanner or image scanner) is configured to scan a patient 11. The scan provides scan data in a scan domain. The MR imaging device 36 scans a patient 11 to provide k-space measurements (measurements in the frequency domain).

The MR system 100 further includes an image processing system 20 configured to process the MR signals, generate (reconstruct) images of the object or patient 11, and apply the multi-task deep learning model to generate one or more segmentation masks and a disease classification 340 for display to an operator or further analysis. The image processing system 20 may further be configured to train and/or configure the multi-task deep learning model using machine learning techniques. The image processing system 20 includes a processor 22 that is configured to execute instructions, or the method described herein. The image processing system 20 may store the MR signals, images, and multi-task deep learning model in a memory 24. The image processing system 20 may include a display 26 for presentation of images and/or diagnosis to an operator. In an embodiment, the image data may be processed in a different computing unit, for example a different computing device, a remote server, or in a cloud based platform.

In the MR system 100, magnetic coils 12 create a static base or main magnetic field B0 in the body of patient 11 or an object positioned on a table and imaged. Within the magnet system are gradient coils 14 for producing position dependent magnetic field gradients superimposed on the static magnetic field. Gradient coils 14, in response to gradient signals supplied thereto by a gradient and image processing system 20, produce position dependent and shimmed magnetic field gradients in three orthogonal directions and generate magnetic field pulse sequences. The shimmed gradients compensate for inhomogeneity and variability in an MR imaging device magnetic field resulting from patient anatomical variation and other sources.

The MR system 100 includes a RF (radio frequency) module that provides RF pulse signals to RF coil 18. The RF coil 18 produces magnetic field pulses that rotate the spins of the protons in the imaged body of the patient 11 by ninety degrees or by one hundred and eighty degrees for so-called "spin echo" imaging, or by angles less than or equal to 90 degrees for "gradient echo" imaging. Gradient and shim coil control modules in conjunction with RF module, as directed by MR system 100, control slice-selection, phase-encoding, readout gradient magnetic fields, radio frequency transmission, and magnetic resonance signal detection, to acquire magnetic resonance signals representing planar slices of the patient 11.

In response to applied RF pulse signals, the RF coil 18 receives MR signals, e.g., signals from the excited protons within the body as the protons return to an equilibrium position established by the static and gradient magnetic fields. The MR signals are detected and processed by a detector within RF module and the MR system 100 to provide an MR dataset to a processor 22 for processing into an image. In some embodiments, the processor 22 is located in the image processing system 20, in other embodiments, the processor 22 is located remotely. A two or three-dimensional k-space storage array of individual data elements in a memory 24 of the image processing system 20 stores corresponding individual frequency components including an MR dataset. The k-space array of individual data elements includes a designated center, and individual data elements individually include a radius to the designated center.

A magnetic field generator (including coils 12, 14 and 18) generates a magnetic field for use in acquiring multiple individual frequency components corresponding to individual data elements in the storage array. A storage processor in the image processing system 20 stores individual frequency components acquired using the magnetic field in corresponding individual data elements in the array. The row and/or column of corresponding individual data elements alternately increases and decreases as multiple sequential individual frequency components are acquired. The magnetic field generator acquires individual frequency components in an order corresponding to a sequence of substantially adjacent individual data elements in the array, and magnetic field gradient change between successively acquired frequency components is substantially minimized.

The image processing system 20 may use information stored in an internal database to process the detected MR signals in a coordinated manner to generate high quality images of a selected slice(s) of the body (e.g., using the image data processor). The stored information may include a predetermined pulse sequence of an imaging protocol and a magnetic field gradient and strength data as well as data indicating timing, orientation, and spatial volume of gradient magnetic fields to be applied in imaging.

The MR imaging device 36 is configured by the imaging protocol to scan a region of a patient 11, for example the cardiac region. The imaging protocol may include, for example, T1, T2, diffusion-weighted imaging (acquisition of multiple b-values, averages, and/or diffusion directions), turbo-spin-echo imaging (acquisition of multiple averages), or contrast. In one embodiment, the imaging protocol may use compressed sensing. The output of the scan is raw MR data, for example kspace data, that is reconstructed into an image. The reconstruction may use one or more machine learning techniques to generate the image. In an embodiment, multiple images, for example in a sequence may be provided by the MR imaging device 36. The image(s) are then input into the multi-task deep learning model to generate a segmentation mask and a disease diagnosis.

The image processing system 20 may or may not be part of or co-located with the MR imagine device 36. In an example, portions of the image processing system 20 or functions thereof may be provided by a different machine, a server, or using a cloud based platform. The image processing system 20 may include one or more processors 22. The one or more processors 22 may include a general processor, digital signal processor, three-dimensional data processor, graphics processing unit, application specific integrated circuit, field programmable gate array, artificial intelligence processor, digital circuit, analog circuit, combinations thereof, or another now known or later developed device for image processing, analysis, implementation, and configuration of the multi-task deep learning model as described herein. The processor 22 may be a single device, a plurality of devices, or a network. For more than one device, parallel or sequential division of processing may be used. Different devices making up the processor 22 may perform different functions, such as selecting a sequence by a first device, reconstructing by a second device, volume rendering by third device, and analysis by another device. The instructions for implementing the processes, methods, and/or techniques discussed herein are provided on non-transitory computer-readable storage media or memories, such as a cache, buffer, RAM, removable media, hard drive, or other computer readable storage media, for example provided by the memory 24. The instructions are executable by the processor 22 or another processor. Computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the instructions set, storage media, processor or processing strategy and may be performed by software, hardware, integrated circuits, firmware, micro code, and the like, operating alone or in combination. In one embodiment, the instructions are stored on a removable media device for reading by local or remote systems. In other embodiments, the instructions are stored in a remote location for transfer through a computer network. In yet other embodiments, the instructions are stored within a given computer, CPU, GPU, or system. Because some of the constituent system components and method steps depicted in the accompanying figures may be implemented in software, the actual connections between the system components (or the process steps) may differ depending upon the manner in which the present embodiments are programmed.

The output of the processes and methods may be output for further processing or displayed to an operator. The image processing system 22 includes an operator interface 26, formed by an input and an output. The input may be an interface, such as interfacing with a computer network, memory, database, medical image storage, or other source of input data. The input may be a user input device, such as a mouse, trackpad, keyboard, roller ball, touch pad, touch screen, or another apparatus for receiving user input.

The output is a display device but may be an interface. The images, for example, from the MR system 100 or output from the multi-task deep learning model are displayed. For example, a segmented mask and/or a diagnosis is displayed. A generated image with additional information for a given patient 11 may be presented on a display of the operator interface 26. An analysis / interpretation may also be displayed on the display device. The image processing system 20 may be configured to generate a report for the patient 11 that is displayed on the display device. The display is a CRT, LCD, plasma, projector, printer, or other display device. The display is configured by loading an image to a display plane or buffer. The operator interface may include form a graphical user interface (GUI) enabling user interaction with the image processing system 20 and enables user modification in substantially real time.

For MR imaging procedures, segmentation and disease diagnosis has typically been accomplished by acquiring an MR image using a MR imaging device 36 and manually segmenting the various tissues / organs. An operator then analyzes the segmentations and attempts to provide a diagnosis. This is both challenging and time consuming. Recently attempts have been made to speed this process up by automatically segmenting the myocardium in various cardiac MRI acquisitions using artificial intelligence-based techniques. In one example, an approach using a deep learning ensemble for improving segmentation of cardiac MRI T1 maps has been used. This approach focuses on selecting the most accurate segmentation predictions in real-time and employs various fully convolutional neural networks, including different U-net configurations. MyoMapNet represents another deep learning model designed for rapid T1 estimation from cardiac MRI. A convolutional neural network model has also been used for segmenting myocardial boundaries in T1 and T1 maps, employing edge probability estimation for higher precision. The network is fully integrated into MRI scanners using open-source software, demonstrating significant accuracy in myocardial segmentation compared to experts. There are also ongoing advancements in using deep learning and AI for heart disease diagnosis.

There is, however, a lack of integrated systems that can efficiently and accurately perform both myocardial segmentation and disease detection (classification) simultaneously. Existing solutions typically treat these tasks separately, leading to increased processing time and potential loss of relevant information between the segmentation and classification stages. These systems lack accuracy, require extensive preprocessing, and/or are not robust across different datasets. In addition, there are limitations for these methods, such as requiring high-quality imaging, variability among operators, and insufficient integration between segmentation and disease detection processes. While machine learning techniques have improved the reliability of the segmentation task, manual feature extraction remains insufficient for capturing all relevant information from cardiac structures. Furthermore, the integration between manual feature selection techniques and machine learning algorithms is often not optimal, leading to inadequate segmentation and disease detection outcomes.

Embodiments described herein provide an automated approach to cardiac MR tissue mapping image analysis by employing a multi-task deep learning model 300 with an architecture that simultaneously performs myocardial segmentation and disease detection. This integration significantly streamlines the diagnostic process, enhancing both efficiency and accuracy. A multi-task deep learning model architecture is provided that tackles the two tasks concurrently. The multi-task deep learning model 300 leverages shared representations to improve performance on both tasks compared to performing them independently.

In an embodiment, a U-net architecture is used that consists of an encoder-decoder structure with skip connections that help in capturing both local and global information essential for precise segmentation. The original layers in the U-net architecture may be replaced with dense layers. The compressed representation extracted by the encoder part of the U-net, e.g., the latent space, is not only used for reconstructing the segmentation masks 350 in the decoder but also serves as the basis for disease detection using a classification branch 320, ensuring that the classification is intimately tied to the relevant anatomical features. From the latent space, features are directed to a linear classification head configured to identify specific cardiac conditions. The classification branch 320 is optimized to work with features distilled from the segmentation branch 310, ensuring that the detected diseases are directly relevant to the segmented myocardial structures. The multi-task deep learning model 300 may also be extended beyond traditional deep learning by appending statistical features 330 of the myocardium, such as texture, shape, and intensity distributions, directly obtained from the segmentation output. These features are integrated at the bottleneck (latent space) of the network, enriching the model's capacity to differentiate between healthy and diseased tissue based on nuanced variations.

In order to accommodate both tasks, the network architecture is trained using an alternating weight update strategy. The model refines its parameters iteratively using feedback from both the segmentation and classification tasks to continuously enhance performance. This iterative refinement helps in addressing the complex interdependencies between the anatomical structures and the pathological features indicative of disease.

Embodiments address the existing challenges in myocardial segmentation and disease detection. Embodiments provide a robust, accurate, and efficient technical solution to the technical issues of existing machine learning architectures and techniques, particularly beneficial, for example, for diagnosing complex cardiac conditions using T1 and T2 mapping techniques. The dual-task approach not only reduces the time required for analysis but also increases diagnostic precision, providing significant advancements over existing methods.

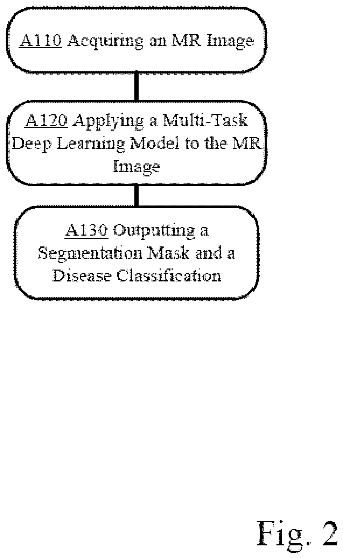

Figure 2 depicts a method for multi-task learning-based myocardial segmentation and disease detection in cardiac MR images. The acts are performed by the system of Figure 1, 3, 5, 6, other systems, a workstation, a computer, and/or a server. Additional, different, or fewer acts may be provided.

At act A110, one or more MR images are acquired. The images may be acquired using the MR system 100 of Figure 1 or may be acquired from, for example, a database of previously acquired images of a patient. The MR image may be an image of a cardiac region of a patient 11. The cardiac MR image may be acquired during a cardiac MR procedure by acquiring MR data and reconstructing the MR image. In an embodiment, MR system 100 is configured to reconstruct a representation of the patient 11 from the raw MR data / scan data into, for example, an object domain. The scan data is a set or frame of k-space data from a scan of the patient 11. The object domain is an image space and corresponds to the spatial distribution of the patient 11. A planar or volume representation or object is reconstructed as an image representing the patient 11. For example, pixels values representing tissue in an area or voxel values representing tissue distributed in a volume are generated. For reconstructing the image, the MR system 100 may be configured to implement one or more AI based models that are trained / configured to input raw MR data and output the MR image. In an embodiment, the one or more MR images are acquired using T1 or T2. T1-weighted images typically depict normal soft-tissue anatomy and fat. T2-weighted images typically depict fluid and abnormalities (e.g., tumors, inflammation, trauma). The image(s) may be preprocessed prior to be inputted into the multi-task deep learning model 300. For example, denoising, resizing, or other image processing tasks may be performed.

At act A120, a multi-task deep learning model 300 is applied to the one or more MR images in order to generate a segmentation mask and a disease diagnosis from at least one input image. The multi-task deep learning model 300 is configured using machine learning, for example an artificial neural network (ANN) to generate the segmentation mask and disease diagnosis.

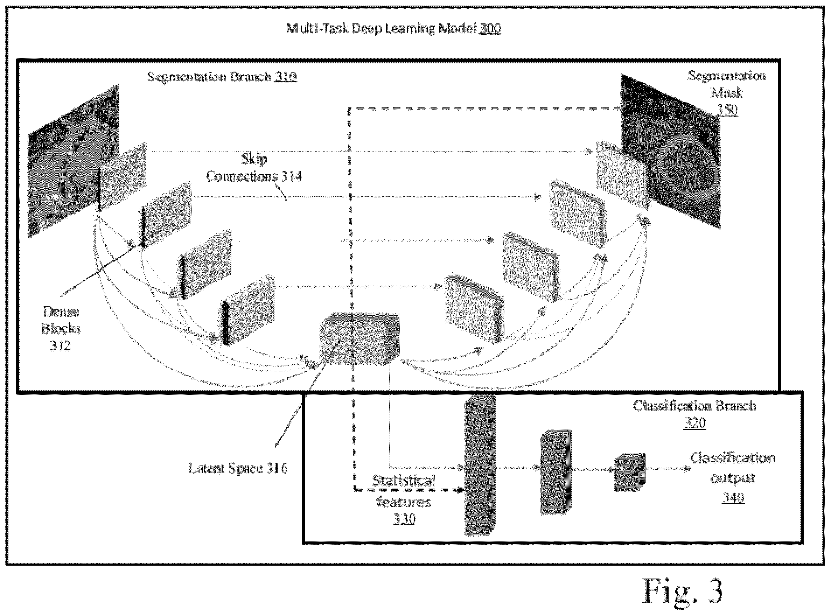

Figure 3 depicts an example of one architecture for the multi-task deep learning model 300. Alternative architectures may be used. The multi-task deep learning model 300 includes two branches, a first branch (Segmentation Branch 310) that is tasked with outputting the segmentation mask 350 and a second branch (Classification Branch 320) that provides the classification output 340. In an embodiment, the segmentation branch 310 may be an image-to-image network, such as a fully convolutional U-net trained to convert an input image to a segmented image. The trained convolution units, weights, links, and/or other characteristics of the network are applied to the data of the two dimensional images and/or derived feature values to extract the corresponding features through a plurality of layers and output the segmentation. The features of the input are extracted from the images. Other more abstract features may be extracted from those extracted features using the architecture. Depending on the number and/or arrangement of units or layers, other features are extracted from the input. The segmentation branch 310 may include an encoder (convolutional) network and decoder (transposed-convolutional) network forming a "U" shape with a connection between passing features at a greatest level of compression or abstractness from the encoder to the decoder. Any now known or later developed U-Net architectures may be used. Other fully convolutional networks may be used. In one embodiment, the network includes skip connections 314. The skip connections 314 pass features from the encoder to the decoder at other levels of abstraction or resolution than the most abstract (i.e. other than the bottleneck). Skip connections 314 provide more information to the decoding layers. A fully convolutional layer may be at the bottleneck of the network (i.e., between the encoder and decoder at a most abstract level of layers). The fully connected layer may make sure as much information as possible is encoded. This bottleneck provides a feature rich space referred to as the latent space. The latent space 316 is used as both the input to the decoder of the segmentation branch 310 and the disease detection branch.

In an embodiment, one possible network choice is to use a DenseUNet for the segmentation branch 310. The DenseUNet is an encoder-decoder network characterized by successive Dense Blocks 312 and pooling layers in its downsampling path, and Dense Blocks 312 with upsampling layers in its upsampling path. Unlike a standard U-Net, which typically uses simple convolutional blocks, DenseUNet employs Dense Blocks 312. These blocks are composed of multiple convolutional layers where each layer receives inputs from all previous layers, enhancing feature propagation and reducing the number of parameters. In an embodiment, the segmentation branch 310 includes 5 downsampling and 5 upsampling blocks, each with 5 convolutional layers. The convolutional layers include 16 kernels of size 3 x 3 with padding to ensure the same image size. In an example, the input is a grayscale image (1 channel), and the output is represented on 3 channels: one for the left ventricle mask, one for the myocardium mask, and one for the background. The final activation function may be softmax. The classification branch 320 consists of three linear layers, with the first layers followed by the ReLU activation function and the last layer followed by softmax for multi-class classification (to distinguish between diseases) or by sigmoid for binary classification (diseased vs. healthy).

In an embodiment, additional information, for example statistical features 330, is input from the output of the segmentation branch 310 back into the disease detection branch. The additional information provides for the multi-task deep learning model 300 to leverage a clinical interpretability of mapping image pixels and inject the statistical features 330 computed based on the myocardial segmentation mask into the linear network. This addition provides several benefits, in particular for acquisitions where such statistical features 330 carry relevant information for the task, such as in mapping-based disease detection.

The additional information may include various statistical features 330 that are derived from the output segmentation masks 350. The statistical features 330, for example, may be computed on first and second order statistics of gray level intensities of the output segmented image / mask. First order features may be derived from an image grey value histogram and include, for example, the intensity, mean, median, and standard deviation of the pixel values. Second order features may be derived from the first order features and other data. The statistical features 330 may include but are not limited to mean / median intensity, lower and upper quartiles of intensity, standard deviation, entropy, skewness, kurtosis, energy, contrast, inverse difference moment (IDM), directional moment (DM), Correlation, and coarseness among others. The mean intensity is the average gray-level value taken across all pixels. Entropy indicates a degree of randomness in the image. Skew indicates the degree of symmetry of gray values centered about the mean. Kurtosis describes the image's distribution of gray values relative to the mean vs the tails. Energy describes the degree of pixel value pair repetitions in the image. Contrast describes the overall measure of intensity of pixels compared with its neighbors. IDM quantifies the homogeneity of the image. DM measures the alignment of the image. Coarseness quantifies the roughness of the texture in the image. In an embodiment, additional information such as structure features may also be used. For example, the shape or texture of the myocardium may be used. One or more layers or a separate network may be used to compute the statistical features 330 or structural features. In an embodiment, the segmentation branch 310 may be fully trained first. The generated myocardium mask may be used to extract statistical features 330 (median, upper quartile) and finally classifying the disease with a separate neural network.

In an embodiment, the disease detection branch (classification branch 320) includes a number of inputs equal to the number of features available at the bottleneck of the DenseUNet plus the number of statistical features 330. The second layer includes half the number of neurons, and the final layer includes as many neurons as the number of classes. Alternative configurations may be used. For example a binary determination may be used instead of a classification.

Training of the network includes inputting an image to the network which outputs one or more segmentation masks 350 and a disease diagnosis (binary or classification). The output segmented mask(s) are compared against the training data to determine a score (segmentation loss). The output classification are compared against the training data to determine a score (classification loss). The scores may represent the level of differences between the output data and correct data (ground truth or gold standard) provided with the training data. The score is used to adjust weights of the multi-task deep learning model 300 using, for example, backpropagation and a gradient. This process is repeated multiple times until the difference between the output and the ground truth is acceptable. The score / segmentation loss may use any segmentation-based evaluation metric, or even multiple metrics predicted simultaneously. Different metrics that may be used may include DICE, Jaccard, true positive rate, true negative rate, volumetric similarity, binary cross-entropy, or others. DICE is a measure of the comparison between two different images or sets of values. The Jaccard index (JAC) between two sets is defined as the intersection between them divided by their union. True Positive Rate (TPR), also called Sensitivity and Recall, measures the portion of positive voxels in the ground truth that are also identified as positive by the segmentation being evaluated. Analogously, True Negative Rate (TNR), also called Specificity, measures the portion of negative voxels (background) in the ground truth segmentation that are also identified as negative by the segmentation being evaluated. The disease diagnosis branch also provides a loss value that is backpropagated through the network, for example using a binary cross-entropy loss, a AUC loss, a positive predictive value (PPV), a F1 score, or other loss value or score. Binary cross entropy or Log Loss, for example, is the negative average of the log of corrected predicted probabilities used for classification problems. The two branches may be optimized asynchronously so that the classification branch 320 can make use of the predicted segmentation mask. In an embodiment, the two branches are optimized by minimizing the Jaccard loss for segmentation and then the binary cross-entropy loss for classification.

The simultaneous training for myocardial segmentation and cardiac disease classification 340 within a single deep learning model provides that the features learned by the network are optimal for both segmentation and classification, leading to improvements in both tasks. The integrated training capitalizes on the fact that accurate disease detection is inherently linked to precise anatomical segmentation. By learning these tasks together, the model develops a more nuanced understanding of cardiac images, recognizing subtle patterns and variations that may indicate disease, which might be overlooked when tasks are treated separately.

In an embodiment, as referenced above, the model uses the strategic inclusion of statistical features 330, such as, for example mean intensity, lower and upper quartile, directly at the network bottleneck, the point in the architecture where the representation is most compressed and informative. This inclusion enhances the network's discriminative capability, enabling it to detect subtle variations in the myocardium that may indicate disease. These statistical features 330 provide additional context that complements the high-level features learned by the network, offering a richer, more detailed representation of the cardiac tissue. This approach not only improves the model's accuracy in identifying specific diseases but also makes it more generalizable across different patient populations and imaging conditions.

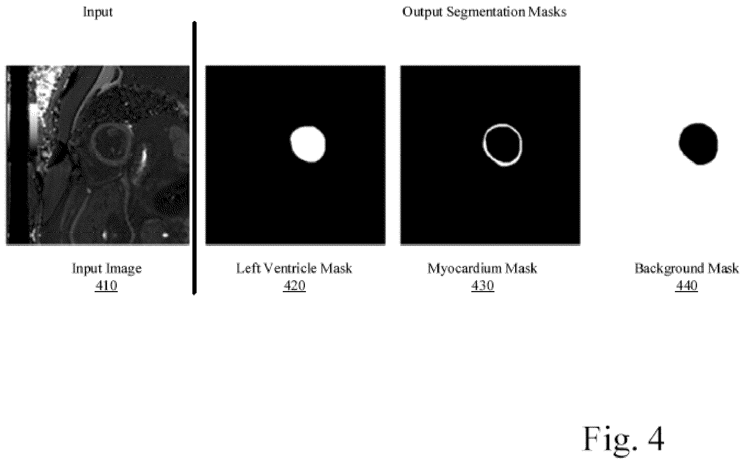

At Act A130, the multi-task deep learning model 300 outputs a segmentation mask and one or more disease classifications. Figure 4 depicts an example of segmentation masks 350 output by the multi-task deep learning model 300. The input 410 is a grey scale image. The output masks include a left ventricle mask 420, a myocardium mask 430, and a background mask 440. Fewer or additional masks may be output. The different masks may provide different statistical features 330 for input to the classification branch 320.

In addition or as an alternative, the system may output a diagnosis or a report for the patient 11. The diagnosis may include a disease classification 340 and quantitative data, for example derived from the segmentation masks 350. The disease classification 340 may be a binary determination or a specific classification. For example, using the multi-task deep learning model, the patient 11 may be diagnosed with myocarditis, which is an inflammation of the heart muscle, called the myocardium. By training the multi-task deep learning model to generate both a segmentation mask, for example for the myocardium, and the disease classification 340, the diagnosis may be more accurate. Other cardiovascular diseases (CVDs) that may be identified may include, among others, hypertrophic cardiomyopathy, dilated cardiomyopathy, coronary artery disease, left ventricular noncompaction cardiomyopathy, restrictive cardiomyopathy, cardiac amyloidosis, hypertensive heart disease, arrhythmogenic right ventricular cardiomyopathy, and pulmonary arterial hypertension. Additional information may be used with the classification in order to identify the disease. The disease detection branch may be able to identify or help classify inflammatory hyperemia and edema, necrosis/scar, contractile dysfunction, and accompanying pericardial effusion.

In an embodiment, the diagnosis may be input into a further model with additional information from other sources to improve the analysis or diagnosis of the patient 11. Multiple images may be processed by the system to generate the diagnosis for the patient 11, for example, a sequence of images that describe the function of the cardiac region (organs, tissues, blood flow, etc.) of the patient 11.

Embodiments leverage the power of artificial intelligence (AI) to provide more accurate and efficient disease diagnosis. In an embodiment, the system 100 is configured to train and /or implement one or more machine learned networks, for example that make up the multi-task deep learning model 300. The machine learned network(s) or model(s) may include a neural network that is defined as a plurality of sequential feature units or layers. Sequential is used to indicate the general flow of output feature values from one layer to input to a next layer. Sequential is used to indicate the general flow of output feature values from one layer to input to a next layer. The information from the next layer is fed to the next layer, and so on until the final output. The layers may only feed forward or may be bi-directional, including some feedback to a previous layer. The nodes of each layer or unit may connect with all or only a sub-set of nodes of a previous and/or subsequent layer or unit. Skip connections may be used, such as a layer outputting to the sequentially next layer as well as other layers. Rather than pre-programming the features and trying to relate the features to attributes, the deep architecture is defined to learn the features at different levels of abstraction based on the input data. The features are learned to reconstruct lower-level features (i.e., features at a more abstract or compressed level). Each node of the unit represents a feature. Different units are provided for learning different features. Various units or layers may be used, such as convolutional, pooling (e.g., max pooling), deconvolutional, fully connected, or other types of layers. Within a unit or layer, any number of nodes is provided. For example, 100 nodes are provided. Later or subsequent units may have more, fewer, or the same number of nodes. Different configurations of networks may be used for different applications. Different training mechanisms and training data may be used for different applications.

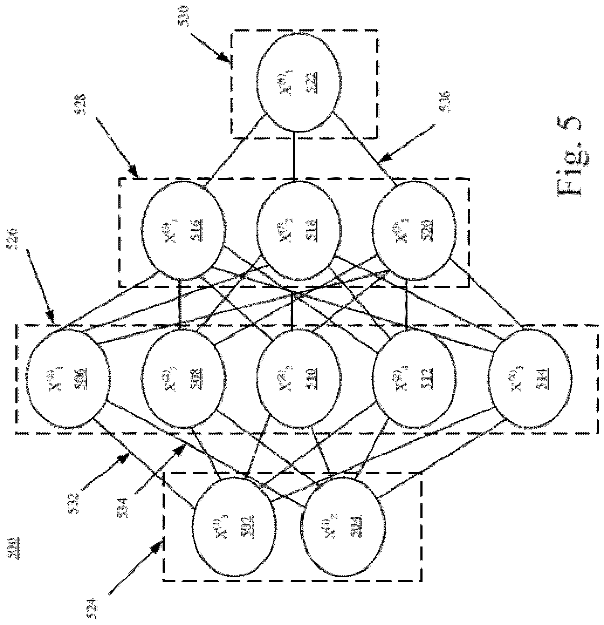

Figure 5 shows an embodiment of an artificial neural network 500, in accordance with one or more embodiments. Alternative terms for "artificial neural network" are "neural network", "artificial neural net" or "neural net". The artificial neural network 500 may be used in part in, for example, the one or more machine learning based networks utilized for the multi-task deep learning model 300 including the encoder-decoder structure of the UNET and the classification network.

The artificial neural network 500 includes nodes 502-522 and edges 532, 534, ..., 536, wherein each edge 532, 534, ..., 536 is a directed connection from a first node 502-522 to a second node 502-522. In general, the first node 502-522 and the second node 502-522 are different nodes 502-522, it is also possible that the first node 502-522 and the second node 502-522 are identical. For example, in Figure 5, the edge 532 is a directed connection from the node 502 to the node 506, and the edge 534 is a directed connection from the node 504 to the node 506. An edge 532, 534, ..., 536 from a first node 502-522 to a second node 502-522 is also denoted as "ingoing edge" for the second node 502-522 and as "outgoing edge" for the first node 502-522.

In this embodiment, the nodes 502-522 of the artificial neural network 500 may be arranged in layers 524-530, wherein the layers may include an intrinsic order introduced by the edges 532, 534, ..., 536 between the nodes 502-522. In particular, edges 532, 534, ..., 536 may exist only between neighboring layers of nodes. In the embodiment shown in Figure 5, there is an input layer 524 including only nodes 502 and 504 without an incoming edge, an output layer 530 including only node 522 without outgoing edges, and hidden layers 526, 528 in-between the input layer 524 and the output layer 530. In general, the number of hidden layers 526, 528 may be chosen arbitrarily. The number of nodes 502 and 504 within the input layer 524 usually relates to the number of input values of the neural network 500, and the number of nodes 522 within the output layer 530 usually relates to the number of output values of the neural network 500.

In particular, a (real) number may be assigned as a value to every node 502-522 of the neural network 500. Here, $x^{(n)}_i$ denotes the value of the i-th node 502-522 of the n-th layer 524-530. The values of the nodes 502-522 of the input layer 524 are equivalent to the input values of the neural network 500, the value of the node 522 of the output layer 530 is equivalent to the output value of the neural network 500. Furthermore, each edge 532, 534, ..., 536 may include a weight being a real number, in particular, the weight is a real number within the interval [-1, 1] or within the interval [0, 1]. Here, $w^{(m,n)}_{i,j}$ denotes the weight of the edge between the i-th node 502-522 of the m-th layer 524-530 and the j-th node 502-522 of the n-th layer 524-530. Furthermore, the abbreviation $w^{(n)}_{i,j}$ is defined for the weight $w^{(n,n+1)}_{i,j}$.

In particular, to calculate the output values of the neural network 500, the input values are propagated through the neural network. In particular, the values of the nodes 502-522 of the (n+1)-th layer 524-530 may be calculated based on the values of the nodes 502-522 of the n-th layer 524-530 by

$$x^{(n+1)}_j = f\left(\sum_i x^{(n)}_i \cdot w^{(n)}_{i,j}\right).$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 524 are given by the input of the neural network 500, wherein values of the first hidden layer 526 may be calculated based on the values of the input layer 524 of the neural network, wherein values of the second hidden layer 528 may be calculated based in the values of the first hidden layer 526, etc.

In order to set the values $w^{(m,n)}_{i,j}$ for the edges, the neural network 500 has to be trained using training data. In particular, training data includes training input data and training output data (denoted as $t_i$). For a training step, the neural network 500 is applied to the training input data to generate calculated output data. In particular, the training data and the calculated output data include a number of values, said number being equal with the number of nodes of the output layer.

In particular, a comparison between the calculated output data and the training data is used to recursively adapt the weights within the neural network 500 (backpropagation algorithm). In particular, the weights are changed according to

$$w'^{(n)}_{i,j} = w^{(n)}_{i,j} - \gamma \cdot \delta^{(n)}_j \cdot x^{(n)}_i$$

wherein $\gamma$ is a learning rate, and the numbers $\delta^{(n)}_j$ may be recursively calculated as

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer, and

$$\delta^{(n)}_j = \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 530, wherein f' is the first derivative of the activation function, and $y^{(n+1)}_j$ is the

comparison training value for the j-th node of the output layer 530.

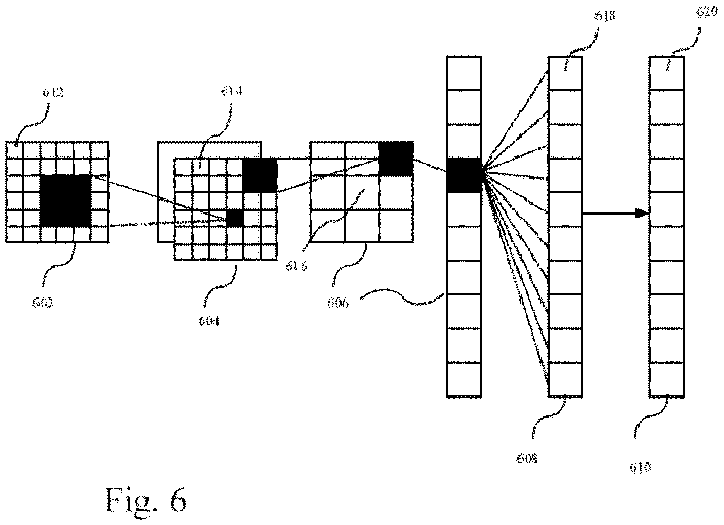

Figure 6 shows a convolutional neural network 600, in accordance with one or more embodiments. Machine learning networks described herein, such as, e.g., the encoder decoder structure, UNet, DenseUNet, and/or classification branch 320 may be implemented using convolutional neural network 600.

In the embodiment shown in Figure 6, the convolutional neural network includes 600 an input layer 602, a convolutional layer 604, a pooling layer 606, a fully connected layer 608, and an output layer 610. Alternatively, the convolutional neural network 600 may include several convolutional layers 604, several pooling layers 606, and several fully connected layers 608, as well as other types of layers. The order of the layers may be chosen arbitrarily, usually fully connected layers 608 are used as the last layers before the output layer 610.

In particular, within a convolutional neural network 600, the nodes 612-620 of one layer 602-610 may be considered to be arranged as a d-dimensional matrix or as a d-dimensional image. In particular, in the two-dimensional case the value of the node 612-620 indexed with i and j in the n-th layer 602-610 may be denoted as $x^{(n)}{}_{[i,j]}$. However, the arrangement of the nodes 612-620 of one layer 602-610 does not have an effect on the calculations executed within the convolutional neural network 600 as such, since these are given solely by the structure and the weights of the edges.

In particular, a convolutional layer 604 is characterized by the structure and the weights of the incoming edges forming a convolution operation based on a certain number of kernels. In particular, the structure and the weights of the incoming edges are chosen such that the values $x^{(n)}{}_k$ of the nodes 614 of the convolutional layer 604 are calculated as a convolution $x^{(n)}{}_k = K_k * x^{(n-1)}$ based on the values $x^{(n-1)}$ of the nodes 612 of the preceding layer 602, where the convolution * is defined in the two-dimensional case as:

$$x_k^{(n)}[i,j] = \left(K_k * x^{(n-1)}\right)[i,j] = \sum_{i'}\sum_{j'} K_k[i',j'] \cdot x^{(n-1)}[i-i', j-j'] .$$

Here the k-th kernel $K_k$ is a d-dimensional matrix (in this embodiment a two-dimensional matrix), which is usually small compared to the number of nodes 612-618 (e.g. a 3x3 matrix, or a 5x5 matrix). In particular, this implies that the weights of the incoming edges are not independent, but chosen such that they produce said convolution equation. In particular, for a kernel being a 3x3 matrix, there are only 9 independent weights (each entry of the kernel matrix corresponding to one independent weight), irrespectively of the number of nodes 612-620 in the respective layer 602-610. In particular, for a convolutional layer 604, the number of nodes 614 in the convolutional layer is equivalent to the number of nodes 612 in the preceding layer 602 multiplied with the number of kernels.

If the nodes 612 of the preceding layer 602 are arranged as a d-dimensional matrix, using a plurality of kernels may be interpreted as adding a further dimension (denoted as "depth" dimension), so that the nodes 614 of the convolutional layer 604 are arranged as a (d+1)-dimensional matrix. If the nodes 612 of the preceding layer 602 are already arranged as a (d+1)-dimensional matrix including a depth dimension, using a plurality of kernels may be interpreted as expanding along the depth dimension, so that the nodes 614 of the convolutional layer 604 are arranged also as a (d+1)-dimensional matrix, wherein the size of the (d+1)-dimensional matrix with respect to the depth dimension is by a factor of the number of kernels larger than in the preceding layer 602.

The advantage of using convolutional layers 604 is that spatially local correlation of the input data may exploited by enforcing a local connectivity pattern between nodes of adjacent layers, in particular by each node being connected to only a small region of the nodes of the preceding layer.

In embodiment shown in Figure 6, the input layer 602 includes 36 nodes 612, arranged as a two-dimensional 6x6 matrix. The convolutional layer 604 includes 72 nodes 614, arranged as two two-dimensional 6x6 matrices, each of the two matrices being the result of a convolution of the values of the input layer with a kernel. Equivalently, the nodes 614 of the convolutional layer 604 may be interpreted as arranges as a three-dimensional 6x6x2 matrix, wherein the last dimension is the depth dimension.

A pooling layer 606 may be characterized by the structure and the weights of the incoming edges and the activation function of its nodes 616 forming a pooling operation based on a non-linear pooling function f. For example, in the two dimensional case the values $x^{(n)}$ of the nodes 616 of the pooling layer 606 may be calculated based on the values $x^{(n-1)}$ of the nodes 614 of the preceding layer 604 as

$$x^{(n)}[i,j] = f(x^{(n-1)}[id_1, jd_2], \ldots, x^{(n-1)}[id_1+d_1-1, jd_2+d_2-1])$$

In other words, by using a pooling layer 606, the number of nodes 614, 616 may be reduced, by replacing a number $d_1 \cdot d_2$ of neighboring nodes 614 in the preceding layer 604 with a single node 616 being calculated as a function of the values of said number of neighboring nodes in the pooling layer. In particular, the pooling function f may be the max-function, the average or the L2-Norm. In particular, for a pooling layer 606 the weights of the incoming edges are fixed and are not modified by training.

The advantage of using a pooling layer 606 is that the number of nodes 614, 616 and the number of parameters is reduced. This leads to the amount of computation in the network being reduced and to a control of overfitting.

In the embodiment shown in Figure 6, the pooling layer 606 is a max-pooling, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

A fully-connected layer 608 may be characterized by the fact that a majority, in particular, all edges between nodes 616 of the previous layer 606 and the nodes 618 of the fully-connected layer 608 are present, and wherein the weight of each of the edges may be adjusted individually.

In this embodiment, the nodes 616 of the preceding layer 606 of the fully-connected layer 608 are displayed both as two-dimensional matrices, and additionally as non-related nodes (indicated as a line of nodes, wherein the number of nodes was reduced for a better presentability). In this embodiment, the number of nodes 618 in the fully connected layer 608 is equal to the number of nodes 616 in the preceding layer 606. Alternatively, the number of nodes 616, 618 may differ.

Furthermore, in this embodiment, the values of the nodes 620 of the output layer 610 are determined by applying the Softmax function onto the values of the nodes 618 of the preceding layer 608. By applying the Softmax function, the sum the values of all nodes 620 of the output layer 610 is 1, and all values of all nodes 620 of the output layer are real numbers between 0 and 1.

A convolutional neural network 600 may also include a ReLU (rectified linear units) layer or activation layers with non-linear transfer functions. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer.

The input and output of different convolutional neural network blocks may be wired using summation (residual / dense neural networks), element-wise multiplication (attention) or other differentiable operators. Therefore, the convolutional neural network architecture may be nested rather than being sequential if the whole pipeline is differentiable.

In particular, convolutional neural networks 600 may be trained based on the backpropagation algorithm. For preventing overfitting, methods of regularization may be used, e.g. dropout of nodes 612-620, stochastic pooling, use of artificial data, weight decay based on the L1 or the L2 norm, or max norm constraints. Different loss functions may be combined for training the same neural network to reflect the joint training objectives. A subset of the neural network parameters may be excluded from optimization to retain the weights pretrained on another datasets.

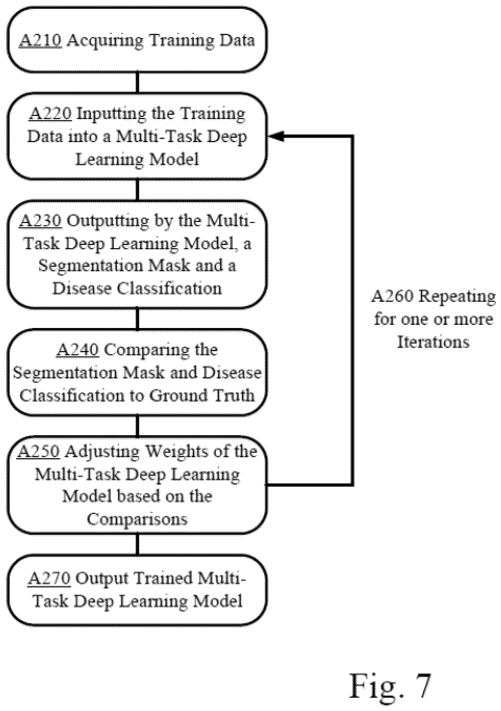

Figure 7 depicts a method for training the multi-task deep learning model. A computer (e.g., processor 22) machine trains the multi-task deep learning model 300. The acts are performed by the system of Figure 1, 3, 5, 6, other systems, a workstation, a computer, and/or a server. Additional, different, or fewer acts may be provided. In an embodiment, the multi-task deep learning model 300 is machine trained using a supervised process and training data.

At Act 210, training data is acquired. The training data includes many sets of data, such as a plurality or MR images and the corresponding ground truth including annotated segmentation masks and associated disease diagnosis. Tens, hundreds, or thousands of samples are acquired, such as from scans of volunteers or patients, scans of phantoms, simulation of scanning, and/or by image processing to create further samples. Many examples that may result from different scan settings, patient anatomy, scanner characteristics, or other variance that results in different samples are used. In one embodiment, an already gathered or created MR dataset is used for the training data. Different sets of training data may be used for different regions of a patient 11. For example, cardiac MR images and cardiac disease training data may be used for training a multi-task deep learning model 300 for cardiac disease classification 340 while other data may be used for different patient organs or regions.

At Act 220, the training data is input into the multi-task deep learning model 300. At Act 230, the multi-task deep learning model 300 outputs one or more segmentation masks 350 and one or more disease classifications 340. In an embodiment, the input is a grayscale image (1 channel), and the output of the multi-task deep learning model 300 includes multiple masks, for example one for the left ventricle mask, one for the myocardium mask, and one for the background, and a multi-class disease classification 340. In an example, a U-net architecture is trained. Simultaneously, statistical features 330 extracted based on the segmentation mask are concatenated to the latent space information and feed into a fully connected network trained to perform disease classification 340.

At Act 240, the one or more segmentation masks 350 and the one or more disease classifications 340 are compared to the ground truth included with the training data. The comparisons may result in a loss value for each task. In an embodiment, the two branches are optimized asynchronously so that the classification branch 320 can make use of the predicted segmentation mask. One possible way to optimize these tasks is to minimize the Jaccard loss for segmentation and then the binary cross-entropy loss for classification. Different loss values or scores may be used.

At Act 250, the weights of the multi-task deep learning model 300 are adjusted based on the comparisons of Act 240. An alternating weight update strategy may be used. The multi-task deep learning model 300 is configured to refine its parameters iteratively, using feedback from both the segmentation and classification tasks to continuously enhance performance. The iterative refinement helps in addressing the complex interdependencies between the anatomical structures and the pathological features indicative of disease.

At Act 260, the steps of Act 220 - Act 250 are repeated for a number of iterations until the output of the multi-task deep learning model 300 reach an acceptable level of accuracy. At Act 270, a trained multi-task deep learning model 300 is output. The multi-task deep learning model 300 may be applied to newly acquired MR images or stored for later use. The multi-task deep learning model 300 may be updated after new data is acquired.

It is to be understood that the elements and features recited in the claims may be combined in different ways to produce new claims that likewise fall within the scope of the present invention. Thus, whereas the dependent claims below depend on only a single independent or dependent claim, it is to be understood that these dependent claims may, alternatively, be made to depend in the alternative from any preceding or following claim, whether independent or dependent, and that such new combinations are to be understood as forming a part of the present specification.

While the present invention has been described above by reference to various embodiments, it may be understood that many changes and modifications may be made to the described embodiments. It is therefore intended that the foregoing description be regarded as illustrative rather than limiting, and that it be understood that all equivalents and/or combinations of embodiments are intended to be included in this description. Independent of the grammatical term usage, individuals with male, female or other gender identities are included within the term.

The following is a list of non-limiting illustrative embodiments disclosed herein:

Illustrative embodiment 1. A method for magnetic resonance (MR) image analysis, the method comprising: acquiring one or more MR images of a patient; applying a multi-task deep learning model to the one or more MR images, the multi-task deep learning model configured to simultaneously perform segmentation and disease detection, wherein the multi-task deep learning model comprises an encoder-decoder structure and a classification network, wherein a compressed representation extracted by an encoder of the encoder-decoder structure is used for reconstructing a segmentation mask by the decoder of the encoder-decoder structure and as an input for the classification network for a classification of one or more diseases; and outputting, by the multi-task deep learning model the segmentation mask and the classification.

Illustrative embodiment 2. The method according to one of the preceding embodiments, wherein the one or more MR images comprise cardiac MR images of the patient, wherein the multi-task deep learning model is configured to perform myocardial segmentation and cardiac disease classification.

Illustrative embodiment 3. The method according to one of the preceding embodiments, wherein the encoder-decoder structure comprises a DenseUNet architecture.

Illustrative embodiment 4. The method according to one of the preceding embodiments, wherein the classification network additionally uses one or more statistical features derived from the segmentation mask as an input.

Illustrative embodiment 5. The method according to illustrative embodiment 4, wherein the one or more statistical features are integrated at the compressed representation of the encoder-decoder structure.

Illustrative embodiment 6. The method according to one of the preceding embodiments, wherein the multi-task deep learning model is trained using an alternating weight update strategy for the encoder-decoder structure and the classification network.

Illustrative embodiment 7. The method according to illustrative embodiment 6, wherein the alternating weight update strategy uses a Jaccard loss for the encoder-decoder structure and then a binary cross-entropy loss for the classification network.

Illustrative embodiment 8. The method according to one of the preceding embodiments, further comprising: displaying the segmentation mask and/or the classification.

Illustrative embodiment 9. A system for magnetic resonance (MR) image analysis, the system comprising: a medical imaging device configured to acquire a cardiac image of a patient; a memory configured to store a multi-task deep learning model configured to simultaneously perform segmentation and disease detection, wherein the multi-task deep learning model comprises an encoder-decoder structure and a classification network, wherein a latent space extracted by an encoder of the encoder-decoder structure is used for reconstructing one or more segmentation masks by the decoder of the encoder-decoder structure and as an input for the classification network for a classification of one or more diseases; and a processor configured to generate the one or more segmentation masks and the classification by inputting the cardiac image into the multi-task deep learning model.

Illustrative embodiment 10. The system according to one of the preceding embodiments, further comprising: a display configured to display the one or more segmentation masks and/or the classification.

Illustrative embodiment 11. The system according to one of the preceding embodiments, wherein the multi-task deep learning model comprises a DenseUNet architecture with dense blocks comprising multiple convolutional layers where each layer receives inputs from all previous layers.

Illustrative embodiment 12. The system according to one of the preceding embodiments, wherein the classification network further takes as input one or more statistical features derived from the one or more segmentation masks.

Illustrative embodiment 13. The system according to illustrative embodiment 12 wherein the statistical features comprise at least one of a mean intensity, a median intensity, or lower and upper quartile intensity that are derived from an image grey value histogram of the one or more segmentation masks.

Illustrative embodiment 14. The system according to one of the preceding embodiments, wherein the multi-task deep learning model is trained using an alternating weight update strategy for the encoder-decoder structure and the classification network.

Illustrative embodiment 15. The system according to one of the preceding embodiments, wherein the classification network comprises a plurality of linear layers, with first layers of the plurality of linear layers followed by a ReLU activation function and a last layer followed by a softmax layer for multi-class classification.

Illustrative embodiment 16. The system according to illustrative embodiment 15, wherein the classification network includes a number of inputs equal to a number of features available from the latent space at a bottleneck of the encoder-decoder structure plus a number of statistical features derived from the one or more segmentation masks.

Illustrative embodiment 17. A method for configuring a multi-task deep learning model, the method comprising: acquiring training data comprising a plurality of cardiac magnetic resonance (MR) images, related ground truth segmentation masks, and related ground truth disease classifications; inputting a cardiac MR image into the multi-task deep learning model, the multi-task deep learning model comprising a segmentation branch and a disease classification branch; outputting, by the multi-task deep learning model, a segmentation mask and a disease classification; adjusting weights of the segmentation branch based on a comparison of the segmentation mask to the related ground truth segmentation mask; adjusting weights of the disease classification branch based on a comparison of the disease classification to the related ground truth disease classification; repeating inputting, outputting, adjusting, and adjusting for a plurality of iterations; and outputting a trained multi-task deep learning model.

Illustrative embodiment 18. The method according to one of the preceding embodiment, wherein the comparison of the segmentation mask to the related ground truth segmentation mask provides a Jaccard loss for segmentation and the comparison of the disease classification to the related ground truth disease classification provides a binary cross-entropy loss for classification.

Illustrative embodiment 19. The method according to one of the preceding embodiment, wherein the segmentation branch comprises a DenseUNet architecture.

Illustrative embodiment 20. The method according to one of the preceding embodiment, wherein the disease classification branch further takes as input one or more statistical features derived from the segmentation mask.

## Claims

1. A method for magnetic resonance (MR) image analysis, the method comprising:

   acquiring (A110) one or more MR images (410) of a patient;
   applying (A120) a multi-task deep learning model (300) to the one or more MR images (410), the multi-task deep learning model (300) configured to simultaneously perform segmentation and disease detection, wherein the multi-task deep learning model (300) comprises an encoder-decoder structure (310) and a classification network (320), wherein a compressed representation (316) extracted by an encoder of the encoder-decoder structure (310) is used for reconstructing a segmentation mask (350) by the decoder of the encoder-decoder structure (310) and as an input for the classification network (320) for a classification of one or more diseases; and
   outputting (A130), by the multi-task deep learning model (300) the segmentation mask (350) and the classification (340).

2. The method of claim 1, wherein the one or more MR images (410) comprise cardiac MR images (410) of the patient, wherein the multi-task deep learning model (300) is configured to perform myocardial segmentation and cardiac disease classification (340).

3. The method of claim 1, wherein the encoder-decoder structure (310) comprises a DenseUNet architecture.

4. The method of claim 1, wherein the classification network (320) additionally uses one or more statistical features (330) derived from the segmentation mask (350) as an input.

5. The method of claim 4, wherein the one or more statistical features (330) are integrated at the compressed representation (316) of the encoder-decoder structure (310).

6. The method of claim 1, wherein the multi-task deep learning model (300) is trained using an alternating weight update strategy for the encoder-decoder structure (310) and the classification network (320).

7. The method of claim 6, wherein the alternating weight update strategy uses a Jaccard loss for the encoder-decoder structure (310) and then a binary cross-entropy loss for the classification network (320).

8. The method of claim 1, further comprising:
   displaying the segmentation mask (350) and/or the classification (340).

9. A system (100) for magnetic resonance (MR) image analysis, the system (100) comprising:

   a medical imaging device (36) configured to acquire a cardiac image (410) of a patient;
   a memory (24) configured to store a multi-task deep learning model (300) configured to simultaneously perform segmentation and disease detection, wherein the multi-task deep learning model (300) comprises an encoder-decoder structure (310) and a classification network (320), wherein a latent space (316) extracted by an encoder of the encoder-decoder structure (310) is used for reconstructing one or more segmentation masks (350) by the decoder of the encoder-decoder structure (310) and as an input for the classification network (320) for a classification (340) of one or more diseases; and
   a processor (22) configured to generate the one or more segmentation masks (350) and the classification (340) by inputting the cardiac image (410) into the multi-task deep learning model (300).

10. The system of claim 9, further comprising:
    a display (26) configured to display the one or more segmentation masks (350) and/or the classification (340).

11. The system of claim 9, wherein the multi-task deep learning model (300) comprises a DenseUNet architecture with dense blocks comprising multiple convolutional layers where each layer receives inputs from all previous layers.

12. The system of claim 9, wherein the classification network (320) further takes as input one or more statistical features (330) derived from the one or more segmentation masks (350).

13. The system of claim 12, wherein the statistical features (330) comprise at least one of a mean intensity, a median intensity, or lower and upper quartile intensity that are derived from an image grey value histogram of the one or more segmentation masks (350).

14. The system of claim 9, wherein the multi-task deep learning model (300) is trained using an alternating weight update strategy for the encoder-decoder structure (310) and the classification network (320).

15. The system of claim 9, wherein the classification network (320) comprises a plurality of linear layers, with first layers of the plurality of linear layers followed by a ReLU activation function and a last layer followed by a softmax layer for multi-class classification.

16. The system of claim 15, wherein the classification network (320) includes a number of inputs equal to a number of features available from the latent space (316) at a bottleneck of the encoder-decoder structure (310) plus a number of statistical features (330) derived from the one or more segmentation masks (350).

17. A method for configuring a multi-task deep learning model (300), the method comprising:

    acquiring (A210) training data comprising a plurality of cardiac magnetic resonance (MR) images, related ground truth segmentation masks (350), and related ground truth disease classifications (340);
    inputting (A220) a cardiac MR image into the multi-task deep learning model (300), the multi-task deep learning model (300) comprising a segmentation branch (310) and a disease classification branch (320);
    outputting (A230), by the multi-task deep learning model (300), a segmentation mask (350) and a disease classification;
    adjusting (A250) weights of the segmentation branch (310) based on a comparison (A240) of the segmentation mask (350) to the related ground truth segmentation mask (350);
    adjusting (A250) weights of the disease classification branch (320) based on a comparison (A240) of the disease classification to the related ground truth disease classification;
    repeating (A260) inputting, outputting, adjusting, and adjusting for a plurality of iterations; and

outputting (A270) a trained multi-task deep learning model (300).

18. The method of claim 17, wherein the comparison of the segmentation mask (350) to the related ground truth segmentation mask (350) provides a Jaccard loss for segmentation and the comparison of the disease classification to the related ground truth disease classification provides a binary cross-entropy loss for classification.

19. The method of claim 17, wherein the segmentation branch (310) comprises a DenseUNet architecture.

20. The method of claim 17, wherein the disease classification branch (320) further takes as input one or more statistical features (330) derived from the segmentation mask (350).

Fig. 1

A110 Acquiring an MR Image

A120 Applying a Multi-Task Deep Learning Model to the MR Image

A130 Outputting a Segmentation Mask and a Disease Classification

Fig. 2

Multi-Task Deep Learning Model 300

Segmentation Branch 310

Segmentation Mask 350

Skip Connections 314

Dense Blocks 312

Latent Space 316

Classification Branch 320

Statistical features 330

Classification output 340

Fig. 3

Input

Output Segmentation Masks

Input Image
410

Left Ventricle Mask
420

Myocardium Mask
430

Background Mask
440

Fig. 4

Fig. 5

Fig. 6

A210 Acquiring Training Data

A220 Inputting the Training Data into a Multi-Task Deep Learning Model

A230 Outputting by the Multi-Task Deep Learning Model, a Segmentation Mask and a Disease Classification

A240 Comparing the Segmentation Mask and Disease Classification to Ground Truth

A250 Adjusting Weights of the Multi-Task Deep Learning Model based on the Comparisons

A260 Repeating for one or more Iterations

A270 Output Trained Multi-Task Deep Learning Model

Fig. 7

Europäisches
Patentamt

European
Patent Office

Office européen
des brevets

## EUROPEAN SEARCH REPORT

**Application Number**

EP 24 46 5569

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEJUN HUANG ET AL: "Automatic diagnosis of cardiac magnetic resonance images based on semi-supervised learning", ARXIV.ORG, CORNELL UNIVERSITY LIBRARY, 201 OLIN LIBRARY CORNELL UNIVERSITY ITHACA, NY 14853, 23 May 2024 (2024-05-23), XP091764992, | 1,2,4,5, 8-10,12, 17,20 | INV. G06N3/045 |
| Y | * abstract; figure all * * section 2.1 Network overall architecture * * section Introduction * | 3,6,7, 11, 14-16, 18,19 | |
| A | * section 2.2. Semi-supervised automatic cardiac image segmentation network * * section 2.4. Disease prediction classifier * * section 2.3. Clinical metrics calculation and categorical * ----- | 13 | |
| Y | TSENG KUO-KUN ET AL: "DNetUnet: a semi-supervised CNN of medical image segmentation for super-computing AI service", THE JOURNAL OF SUPERCOMPUTING, vol. 77, no. 4, 26 August 2020 (2020-08-26), pages 3594-3615, XP037401773, ISSN: 0920-8542, DOI: 10.1007/S11227-020-03407-7 * abstract; figure all * * section 3 Proposed method * ----- | 3,11,19 | **TECHNICAL FIELDS SEARCHED (IPC)** G06N G06T |

-/--

The present search report has been drawn up for all claims

| Place of search | Date of completion of the search | Examiner |
|---|---|---|
| The Hague | 27 January 2025 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 46 5569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NARINDER SINGH PUNN ET AL: "Modality specific U-Net variants for biomedical image segmentation: A survey", ARXIV.ORG, CORNELL UNIVERSITY LIBRARY, 201 OLIN LIBRARY CORNELL UNIVERSITY ITHACA, NY 14853, 2 January 2022 (2022-01-02), XP091127387, * abstract; figure all * * section 6 Analysis * ----- | 6,7, 14-16,18 | |

TECHNICAL FIELDS
SEARCHED     (IPC)

The present search report has been drawn up for all claims

| Place of search | Date of completion of the search | Examiner |
|---|---|---|
| The Hague | 27 January 2025 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)